# EUROPÄISCHE PATENTSCHRIFT

(11) **EP 3 808 233 B1**
(45) Veröffentlichungstag und Bekanntmachung des Hinweises auf die Patenterteilung: **26.07.2023**
(21) Anmeldenummer: 20199786.3
(22) Anmeldetag: 02.10.2020
(51) Int. Cl.: A47J 31/46, A47J 31/057, A47J 31/36

(54) **KAFFEEMASCHINE**
COFFEE MACHINE
CAFETIÈRE

(30) Priorität: 18.10.2019 DE 102019216099
(43) Veröffentlichungstag der Anmeldung: 21.04.2021
(73) Patentinhaber: BSH Hausgeräte GmbH, 81739 München (DE)
(72) Erfinder: Einsiedler, Thomas, 83278 Traunstein (DE); Henz, Manuel, 83410 Laufen (DE); Huber, Michael, 6344 Walchsee (AT)

(56) Entgegenhaltungen:
- WO-A1-2017/005376
- DE-A1-102006 006 785

## Beschreibung

Die Erfindung betrifft eine Kaffeemaschine. Die Erfindung betrifft ferner ein Verfahren zum Betreiben einer solchen Kaffeemaschine.

Um die in wasser- und dampfführenden Komponenten von Kaffeemaschinen durch Nutzung entstehende Kalkablagerungen zu entfernen, können regelmäßig Pflegevorgänge mit einem Pflegemittel durchgeführt werden. Dies gilt auch, um die in kaffeeproduktführenden Komponenten von Kaffeemaschinen durch Nutzung, insbesondere durch Zubereitung von Kaffeeprodukten, entstehende Verschmutzungen zu beseitigen. Insbesondere soll auf diese Weise die Ausbreitung von Pilzen und Keimen vermieden werden. Hierzu wird oftmals ein Entkalkungsmittel zum Entfernen der Kalkablagerungen in ein für ein Pflegefluid vorgesehenes Behältnis eingebracht. Alternativ dazu kann auch ein Reinigungsmittel in die Brühkammer der Kaffeemaschine oder in das Behältnis eingebracht werden. Nach dem Einbringen des Pflegefluids kann ein Pflegevorgang durchgeführt werden.

Bei herkömmlichen Kaffeemaschinen können jedoch meist nur wasser- und dampfführende Komponenten gereinigt oder entkalkt werden, welche stromab des Behältnisses für das Pflegefluid oder stromab einer Fördereinrichtung zum Fördern von Wasser oder Wasserdampf angeordnet sind, da die Fördereinrichtung nur zum Fördern des Wassers in eine Richtung, nämlich vom Behältnis weg, ausgebildet ist. Um einen Wassertank der Kaffeemaschine und Leitungen zwischen diesem und der Fördereinrichtung zu reinigen oder zu entkalken, ist daher ein Einbringen eines geeigneten Pflegefluids in den Wassertank erforderlich. Dieses wird mittels der Fördereinrichtung aus dem Wassertank gefördert.

Aus der DE°10°2006°006°785°A1 und der WO°2017°/°005376°A1 sind zudem Kaffeemaschinen mit einem Bypassventil und einer Rücklaufleitung bekannt, über die vermittels der Fördereinrichtung Wasser in den Wassertank zurückgefördert werden kann.

Es ist daher eine Aufgabe der vorliegenden Erfindung, eine verbesserte Ausführungsform einer Kaffeemaschine zu schaffen, bei welcher die oben beschriebenen Nachteile zumindest teilweise, idealerweise vollständig, ausgeräumt sind. Außerdem soll ein Verfahren zum Betreiben eine Kaffeemaschine geschaffen werden, bei welchem eine einfache und effektive Pflege eines Wassertanks der Kaffeemaschine und wasser- und dampfführenden Komponenten, wie beispielsweise Wasserleitungen, zwischen dem Wassertank und einer Fördereinrichtung der Kaffeemaschine realisiert ist.

Diese Aufgabe wird erfindungsgemäß durch den Gegenstand der unabhängigen Patentansprüche gelöst. Vorteilhafte Ausführungsformen sind Gegenstand der abhängigen Patentansprüche.

Grundidee der Erfindung ist demnach, durch Erhitzen von Wasser oder eines Pflegefluids in einer Heizeinrichtung einer Kaffeemaschine das Wasser bzw. das Pflegefluid mittels dem sich beim Erhitzen bildenden Wasser-/Dampfdrucks zu einem Wassertank der Kaffeemaschine zu leiten. Hierfür wird ein Bypassventil eines an der Fördereinrichtung vorbeiführenden Bypasses geöffnet und ein zwischen der Heizeinrichtung und einer Funktionskomponente, insbesondere einer Brühkammer, angeordnetes Sperrventil geschlossen. Auf diese Weise lassen sich der Wassertank und zwischen dem Wassertank und der Fördereinrichtung angeordnete wasser- und dampfführende Komponenten, wie beispielsweise Wasserleitungen, ohne Verwendung der Fördereinrichtung und ohne Einbringen eines entsprechenden Pflegefluids in den Wassertank reinigen.

Eine erfindungsgemäße Kaffeemaschine umfasst einen Wassertank, der mittels einer Wasserleitung mit einer Funktionskomponente fluidisch kommuniziert, so dass im Wassertank vorhandenes Wasser mittels der Wasserleitung in die Funktionskomponente eingeleitet werden kann. Die erfindungsgemäße Kaffeemaschine umfasst auch eine in der Wasserleitung angeordnete Fördereinrichtung zum Fördem von Wasser aus dem Wassertank in die Funktionskomponente und eine zwischen der Fördereinrichtung und der Funktionskomponente in der Wasserleitung angeordnete Heizeinrichtung zum Erhitzen des durch die Wasserleitung strömenden Wassers. Außerdem weist die Kaffeemaschine ein Bypassventil, über welches in einer Offenstellung des Bypassventils Wasser an der Fördereinrichtung vorbeigeführt werden kann, und ein in der Wasserleitung zwischen der Heizeinrichtung und der Funktionskomponente angeordnetes Sperrventil auf, welches in einer Schließstellung die Wasserleitung verschließt, so dass kein Wasser von der Heizeinrichtung in die Funktionskomponente strömen kann. Die Kaffeemaschine umfasst zudem eine Steuerungs-/Regelungseinrichtung, mittels welcher das Bypassventil zwischen der Offenstellung und einer Schließstellung verstellbar ist, in welcher kein Wasser an der Fördereinrichtung vorbeigeführt werden kann, und mittels welcher das Sperrventil zwischen der Schließstellung und einer Offenstellung verstellbar ist, in welcher Wasser von der Heizeinrichtung in die Funktionskomponente strömen kann. Mittels der Steuerungs-/Regelungseinrichtung ist die Kaffeemaschine in einen ersten Betriebszustand und in einen zweiten Betriebszustand verstellbar, wobei im ersten Betriebszustand das Bypassventil von der Steuerungs-/Regelungseinrichtung in die Schließstellung und das Sperrventil in die Offenstellung verstellt ist, und wobei im zweiten Betriebszustand das Bypassventil von der Steuerungs-/Regelungseinrichtung in die Offenstellung und das Sperrventil in die Schließstellung verstellt ist.

Gemäß einer bevorzugten Ausführungsform ist die Fördereinrichtung mittels der Steuerungs-/Regelungseinrichtung verstellbar zwischen einem Aktivzustand, in welchem sie Wasser aus dem Wassertank zur Funktionskomponente fördert, und einem Inaktivzustand, in welchem die Fördereinrichtung kein Wasser fördert. Die Fördereinrichtung ist im ersten Betriebszustand der Kaffeemaschine von der Steuerungs-/Regelungseinrichtung in den Aktivzustand verstellt und im zweiten Betriebszustand in den Inaktivzustand verstellt. Mittels dieser Ausführungsform kann im ersten Betriebszustand zum Zubereiten von Kaffee Wasser zu einer Funktionskomponente geleitet werden und im zweiten Betriebszustand ohne Verwendung einer Fördereinrichtung ein Pflegefluid zum Wassertank hin transportiert werden.

Gemäß einer weiteren bevorzugten Ausführungsform ist die Heizeinrichtung mittels der Steuerungs-/Regelungseinrichtung verstellbar zwischen einem Aktivzustand, in welchem das durch die Heizeinrichtung geführte Wasser von dieser erhitzt wird, und einem Inaktivzustand, in welchem das durch die Heizeinrichtung geführte Wasser von dieser nicht erhitzt wird. Die Heizeinrichtung ist im zweiten Betriebszustand der Kaffeemaschine in den Aktivzustand verstellt. Mittels dieser Ausführungsform kann im zweiten Betriebszustand im Wasser oder im Pflegefluid durch Erhitzen Druck aufgebaut und somit das erhitze und druckbeaufschlagte Wasser bzw. Pflegefluid ohne Aktivierung der Fördereinrichtung über wasser- und dampfführende Komponenten der Kaffeemaschine zum Wassertank geleitet werden.

Zweckmäßig ist die Heizeinrichtung auch im ersten Betriebszustand der Kaffeemaschine in den Aktivzustand verstellt. Auf diese Weise kann Wasser aus dem Wassertank zum Brühen von Kaffee oder einem anderen Heißgetränk erhitzt werden.

Erfindungsgemäß weist die Kaffeemaschine ein Behältnis eines Pflegefluid auf, welches zwischen dem Wassertank und der Heizeinrichtung, insbesondere im Bereich des Bypassventils, in die Wasserleitung mündet. Dies ermöglicht ein Einbringen eines Pflegefluids zum Reinigen der wasser- und dampfführenden Komponenten der Kaffeemaschine.

Gemäß einer weiteren vorteilhaften Ausführungsform umfasst die Fördereinrichtung eine Schwingkolbenpumpe, welche derart ausgebildet ist, dass von ihr in der Wasserleitung vorhandenes Wasser in Richtung der Funktionskomponente, nicht aber in Richtung des Wassertanks förderbar ist. Dies ermöglicht ein effizientes Fördern von Wasser vom Wassertank zur Funktionskomponente im ersten Betriebszustand.

Zweckmäßig ist die Funktionskomponente eine Brühkammer oder eine Drainage-Einrichtung oder ein Kaffeeauslass. Auf diese Weise kann im ersten Betriebszustand Kaffee zubereitet und aus der Kaffeemaschine ausgeleitet oder aber auch mittels eines Pflegevorgangs ebendiese Funktionskomponenten gereinigt werden.

Die Erfindung betrifft ferner ein Verfahren zum Betreiben einer vorangehend vorgestellten Kaffeemaschine. Gemäß dem Verfahren wird in dem ersten Betriebszustand der Kaffeemaschine mittels der Fördereinrichtung Wasser oder ein Pflegefluid durch die Wasserleitung über die Heizeinrichtung zur Funktionskomponente gefördert wird. In dem zweiten Betriebszustand der Kaffeemaschine wird bei inaktiver Fördereinrichtung in der Wasserleitung befindliches Wasser oder Pflegefluid durch die aktive Heizeinrichtung erhitzt und somit aus der Wasserleitung zum Wassertank transportiert oder verdampft. Auf diese Weise wird sowohl eine Zubereitung von Kaffee als auch eine Reinigung der wasser- und dampfführenden Komponenten der Kaffeemaschine möglich. Ebenfalls können der Wassertank und wasser- und dampfführenden Komponenten der Kaffeemaschine, wie beispielsweise Wasserleitungen, zwischen dem Wassertank und dem Sperrventil durch das erhitzte Wasser oder - nach Einbringen eines Pflegefluids in das Behältnis für das Pflegefluid - durch das erhitzte Pflegefluid gereinigt bzw. entkalkt werden.

Bevorzugt wird die Kaffeemaschine zunächst im ersten Betriebszustand betrieben, und zwar zumindest bis das Wasser bzw. Pflegefluid die Heizeinrichtung erreicht hat, und anschließend in den zweiten Betriebszustand umgeschaltet. Dies gewährleistet, dass besonders viel Wasser bzw. Pflegefluid mittels der Heizeinrichtung erhitzt und zum Reinigen bzw. Entkalken genutzt werden können. Gleichzeitig baut sich auf diese Weise ein besonders hoher Druck im Wasser bzw. im Pflegefluid auf, so dass dieses effektiv zum Wassertank geleitet wird.

Besonders bevorzugt wird der zweite Betriebszustand solange beibehalten, bis in der Wasserleitung, insbesondere im gesamten Bereich zwischen Sperrventil und Wassertank, kein Wasser mehr vorhanden ist. Mittels dieser Ausführungsform werden die wasser- und dampfführenden Komponenten der Kaffeemaschine besonders gründlich gereinigt und gleichzeitig für einen folgenden Betrieb im ersten Betriebszustand frei von Wasser oder Pflegefluid gemacht.

Weitere wichtige Merkmale und Vorteile der Erfindung ergeben sich aus den Unteransprüchen, aus der Zeichnung und aus der zugehörigen Figurenbeschreibung anhand der Zeichnung.

Bevorzugte Ausführungsbeispiele der Erfindung sind in der Zeichnung dargestellt und werden in der nachfolgenden Beschreibung näher erläutert, wobei gleiche Bezugszeichen sich auf gleiche oder ähnliche Komponenten beziehen.

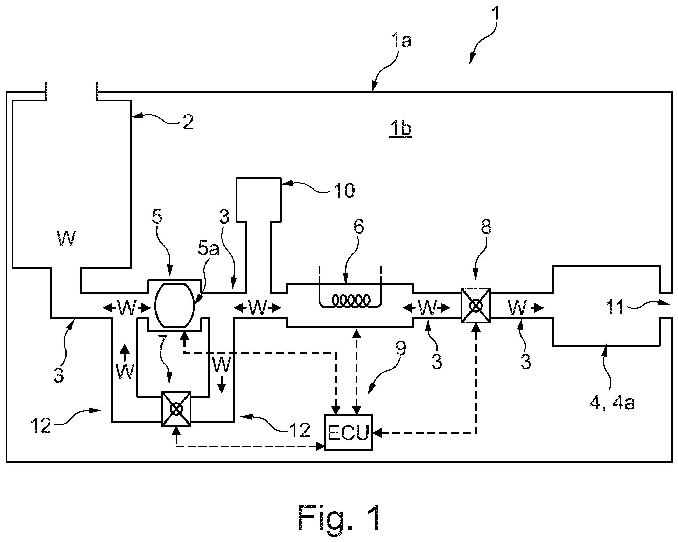

Die einzige Figur 1 illustriert ein Beispiel einer erfindungsgemäßen Kaffeemaschine 1. Die Kaffeemaschine 1 ist mit einem Gehäuse 1a ausgestattet, welches einen Gehäuseinnenraum 1b umgibt. Im Gehäuseinnenraum 1b sind ein Wassertank 2 und eine Funktionskomponente 4a in Form einer Brühkammer 4 angeordnet, wobei der Wassertank 2 und die Brühkammer 4 mittels einer Wasserleitung 3 miteinander fluidisch kommunizieren, sodass im Wassertank vorhandenes Wasser W mittels der Wasserleitung 3 in die Brühkammer 4 transportiert werden kann. Die Brühkammer 4 mündet fluidisch in einen Kaffeeauslass 11, welcher wiederum fluidisch mit einer Drainage (in Figur 1 nicht gezeigt) kommuniziert.

Zum Fördern von Wasser W aus dem Wassertank 2 in die Brühkammer 4 ist in der Wasserleitung 3 eine Fördereinrichtung 5 angeordnet. Im Beispiel der Figur 1 ist die Fördereinrichtung 5 eine Schwingkolbenpumpe 5a, welche derart ausgebildet ist, dass in der Wasserleitung 3 vorhandenes Wasser W von ihr in Richtung der Brühkammer 4, nicht aber in Richtung des Wassertanks 2 förderbar ist. Zwischen der Fördereinrichtung 5 und der Brühkammer 4 ist in der Wasserleitung 3 außerdem eine Heizeinrichtung 6 zum Erhitzen des durch die Wasserleitung 3 strömenden Wassers W angeordnet.

Die Kaffeemaschine 1 umfasst außerdem ferner einen Bypass 12 mit einem Bypassventil 7, über welchen in einer Offenstellung des Bypassventils 7 Wasser W an der Fördereinrichtung 5 vorbeigeführt werden kann.

Die Kaffeemaschine 1 umfasst auch ein in der Wasserleitung 3 zwischen der Heizeinrichtung 6 und der Brühkammer 4 angeordnetes Sperrventil 8, welches in einer Schließstellung die Wasserleitung 3 verschließt, sodass kein Wasser W von der Heizeinrichtung 6 in die Brühkammer 4 strömen kann.

Die Kaffeemaschine 1 weist außerdem eine Steuerungs-/Regelungseinrichtung 9 auf, welche mit der Fördereinrichtung 5, der Heizeinrichtung 6, dem Bypassventil 7 und dem Sperrventil 8 kommuniziert. Mittels der Steuerungs-/Regelungseinrichtung 9 ist das Bypassventil 7 zwischen der Offenstellung und einer Schließstellung, in welcher kein Wasser W an der Fördereinrichtung 5 vorbei geführt werden kann, verstellbar. Mittels der Steuerungs-/Regelungseinrichtung 9 ist auch das Sperrventil 8 zwischen der Schließstellung und einer Offenstellung, in welcher Wasser W von der Heizeinrichtung 6 in die Brühkammer 4 strömen kann, verstellbar.

Mittels der Steuerungs-/Regelungseinrichtung 9 ist auch die Fördereinrichtung 5 verstellbar zwischen einem Aktivzustand, in welchem die Fördereinrichtung 5 Wasser W aus dem Wassertank 2 zur Brühkammer 4 fördert, und einem Inaktivzustand, in welchem die Fördereinrichtung 5 kein Wasser W fördert.

Mittels der Steuerungs-/Regelungseinrichtung 9 ist auch die Heizeinrichtung 6 verstellbar zwischen einem Aktivzustand, in welchem das durch die Heizeinrichtung 6 geführte Wasser W von dieser erhitzt wird, und einem Inaktivzustand, in welchem das durch die Heizeinrichtung 6 geführte Wasser W von dieser nicht erhitzt wird.

Mittels der Steuerungs-/Regelungseinrichtung 9 ist die Kaffeemaschine 1 verstellbar zwischen einem ersten Betriebszustand und einem zweiten Betriebszustand. Im ersten Betriebszustand ist das Bypassventil 7 von der Steuerungs-/Regelungseinrichtung 9 in die Schließstellung und das Sperrventil 8 in die Offenstellung verstellt. Außerdem sind im ersten Betriebszustand die Fördereinrichtung 5 und die Heizeinrichtung 6 jeweils in ihren Aktivzustand verstellt. Somit kann Wasser W aus dem Wassertank 2 mittels der Heizeinrichtung 6 erhitzt und der Brühkammer 4 zugeführt werden.

Im zweiten Betriebszustand ist das Bypassventil 7 von der Steuerungs-/Regelungseinrichtung 9 in die Offenstellung und das Sperrventil 8 in die Schließstellung verstellt. Außerdem ist die Fördereinrichtung 5 im zweiten Betriebszustand in den Inaktivzustand und die Heizeinrichtung 6 in den Aktivzustand verstellt. Somit kann von der Heizeinrichtung 6 erhitztes und druckbeaufschlagtes Wasser W bzw. Pflegefluid ohne Verwendung der Fördereinrichtung 5 und ohne Verwendung einer weiteren Fördereinrichtung in den Wassertank 2 transportiert werden.

Die Kaffeemaschine 1 umfasst außerdem ein Behältnis 10 eines Pflegefluids, welches zwischen dem Wassertank 2 und der Heizeinrichtung 6 und zwischen der Fördereinrichtung 5 und der Heizeinrichtung 6 in die Wasserleitung 3 mündet.

Im Folgenden wird das erfindungsgemäße Verfahren zum Betreiben der Kaffeemaschine 1 beispielhaft erläutert.

In dem vorangehend erläuterten ersten Betriebszustand der Kaffeemaschine 1 wird mittels der Fördereinrichtung 5 Wasser W oder ein Pflegefluid (in Figur 1 nicht gezeigt) durch die Wasserleitung 3 über die Heizeinrichtung 6 und durch das Sperrventil 8 zur Brühkammer 4 gefördert. In dem ebenfalls vorangehend erläuterten zweiten Betriebszustand der Kaffeemaschine 1 wird bei inaktiver Fördereinrichtung 5 in der Wasserleitung 3 befindliches Wasser W oder Pflegefluid durch die aktive Heizeinrichtung 6 erhitzt und somit über die Wasserleitung 3 und über das Bypassventil 7 zum Wassertank 2 transportiert oder verdampft.

Die Kaffeemaschine 1 kann zunächst im ersten Betriebszustand betrieben werden, bis das Wasser W beziehungsweise das Pflegefluid mindestens die Heizeinrichtung 6 erreicht hat und anschließend kann in den zweiten Betriebszustand umgeschaltet werden. Der zweite Betriebszustand kann dann solange beibehalten werden, bis in der Wasserleitung 3 und im gesamten Bereich zwischen dem Sperrventil 8 - oder mindestens der Heizeinrichtung 6 - und dem Wassertank 2 kein Wasser W oder Pflegefluid mehr vorhanden ist.

### Bezugszeichenliste

- 1: Kaffeemaschine
- 1a: Gehäuse
- 1b: Gehäuseinnenraum
- 2: Wassertank
- 3: Wasserleitung
- 4: Brühkammer
- 4a: Funktionskomponente
- 5: Fördereinrichtung
- 5a: Schwingkolbenpumpe
- 6: Heizeinrichtung
- 7: Bypassventil
- 8: Sperrventil
- 9: Steuerungs-/Regelungseinrichtung
- 10: Behältnis für Pflegefluid
- 11: Kaffeeauslass
- 12: Bypass

## Patentansprüche

1. Kaffeemaschine (1),
- mit einem Wassertank (2), der mittels einer Wasserleitung (3) mit einer Funktionskomponente (4) fluidisch kommuniziert, so dass im Wassertank (2) vorhandenes Wasser (W) mittels der Wasserleitung (3) in die Funktionskomponente (4a) einleitbar ist,
- mit einer in der Wasserleitung (3) angeordneten Fördereinrichtung (5) zum Fördern von Wasser (W) aus dem Wassertank (2) in die Funktionskomponente (4a),
- mit einer zwischen der Fördereinrichtung (5) und der Funktionskomponente (4a) in der Wasserleitung (3) angeordneten Heizeinrichtung (6) zum Erhitzen des durch die Wasserleitung (3) strömenden Wassers (W),
- mit einem Bypassventil (7), über welches in einer Offenstellung des Bypassventils (7) Wasser an der Fördereinrichtung (5) vorbeigeführt werden kann,
- mit einem in der Wasserleitung (3) zwischen der Heizeinrichtung (6) und der Funktionskomponente (4a) angeordneten Sperrventil (8), welches in einer Schließstellung die Wasserleitung (3) verschließt, so dass kein Wasser (W) von der Heizeinrichtung (6) in die Funktionskomponente (4a) strömen kann,
- wobei die Kaffeemaschine (1) ein Behältnis (10) eines Pflegefluids aufweist, welches zwischen dem Wassertank (2) und der Heizeinrichtung (6), insbesondere im Bereich des Bypassventils (7), in die Wasserleitung (3) mündet,
- wobei die Kaffeemaschine (1) eine Steuerungs-/Regelungseinrichtung (9) umfasst, mittels welcher das Bypassventil (7) zwischen der Offenstellung und einer Schließstellung verstellbar ist, in welcher kein Wasser (W) an der Fördereinrichtung (5) vorbeigeführt werden kann, und mittels welcher das Sperrventil (8) zwischen der Schließstellung und einer Offenstellung verstellbar ist, in welcher Wasser (W) von der Heizeinrichtung (6) in die Funktionskomponente (4a) strömen kann,
- wobei die Kaffeemaschine (1) mittels der Steuerungs-/Regelungseinrichtung (9) in einen ersten Betriebszustand und in einen zweiten Betriebszustand verstellbar ist,
- wobei im ersten Betriebszustand das Bypassventil (7) von der Steuerungs-/Regelungseinrichtung (9) in die Schließstellung und das Sperrventil (8) in die Offenstellung verstellt ist,
- wobei im zweiten Betriebszustand das Bypassventil (7) von der Steuerungs-/Regelungseinrichtung (9) in die Offenstellung und das Sperrventil (8) in die Schließstellung verstellt ist.

2. Kaffeemaschine nach Anspruch 1,
**dadurch gekennzeichnet, dass**
- die Fördereinrichtung (5) mittels der Steuerungs-/Regelungseinrichtung (9) verstellbar ist zwischen einem Aktivzustand, in welchem sie Wasser (W) aus dem Wassertank zur Funktionskomponente (4a) fördert, und einem Inaktivzustand, in welchem die Fördereinrichtung (5) kein Wasser fördert,
- wobei die Fördereinrichtung (5) im ersten Betriebszustand der Kaffeemaschine (1) von der Steuerungs-/Regelungseinrichtung (9) in den Aktivzustand verstellt ist und im zweiten Betriebszustand in den Inaktivzustand verstellt ist.

3. Kaffeemaschine nach Anspruch 1 oder 2,
**dadurch gekennzeichnet, dass**
- die Heizeinrichtung (6) mittels der Steuerungs-/Regelungseinrichtung (9) verstellbar ist zwischen einem Aktivzustand, in welchem das durch die Heizeinrichtung (6) geführte Wasser (W) von dieser erhitzt wird, und einem Inaktivzustand, in welchem das durch die Heizeinrichtung (6) geführte Wasser (W) von dieser nicht erhitzt wird,
- wobei die Heizeinrichtung (6) im zweiten Betriebszustand der Kaffeemaschine (1) in den Aktivzustand verstellt ist.

4. Kaffeemaschine nach Anspruch 3,
**dadurch gekennzeichnet, dass**
die Heizeinrichtung (6) auch im ersten Betriebszustand der Kaffeemaschine (1) in den Aktivzustand verstellt ist.

5. Kaffeemaschine nach einem der vorhergehenden Ansprüche,
**dadurch gekennzeichnet, dass**
die Fördereinrichtung (5) eine Schwingkolbenpumpe (5a) umfasst, welche derart ausgebildet ist, dass von ihr in der Wasserleitung (3) vorhandenes Wasser (W) in Richtung der Funktionskomponente (4a), nicht aber in Richtung des Wassertanks (2) förderbar ist.

6. Kaffeemaschine nach einem der vorhergehenden Ansprüche,
**dadurch gekennzeichnet, dass**
die Funktionskomponente (4a) eine Brühkammer oder eine Drainage-Einrichtung oder ein Kaffeeauslass (4, 11) ist.

7. Verfahren zum Betreiben einer Kaffeemaschine (1) nach einem der vorhergehenden Ansprüche, gemäß welchem:
- in dem ersten Betriebszustand der Kaffeemaschine (1) mittels der Fördereinrichtung (5) Wasser (W) oder ein Pflegefluid durch die Wasserleitung (3) über die Heizeinrichtung (6) zur Funktionskomponente (4a) gefördert wird.
- in dem zweiten Betriebszustand der Kaffeemaschine (1) bei inaktiver Fördereinrichtung (5) in der Wasserleitung (3) befindliches Wasser (W) oder Pflegefluid durch die aktive Heizeinrichtung (6) erhitzt und somit aus der Wasserleitung (3) zum Wassertank (2) transportiert oder verdampft wird.

8. Verfahren nach Anspruch 7,
**dadurch gekennzeichnet, dass**
die Kaffeemaschine (1) zunächst im ersten Betriebszustand betrieben wird, mindestens bis das Wasser (W) bzw. das Pflegefluid die Heizeinrichtung (6) erreicht hat, und anschließend in den zweiten Betriebszustand umgeschaltet wird.

9. Verfahren nach Anspruch 7 oder 8,
**dadurch gekennzeichnet, dass**
der zweite Betriebszustand solange beibehalten wird, bis in der Wasserleitung (3), insbesondere im gesamten Bereich zwischen Sperrventil (8) und Wassertank (2), kein Wasser (W) mehr vorhanden ist.

## Claims

1. Coffee machine (1),
- having a water tank (2), which communicates fluidically with a functional component (4) by means of a water pipe (3) so that water (W) available in the water tank (2) can be introduced into the functional component (4a) by means of the water pipe (3),
- having a conveying facility (5) arranged in the water pipe (3) for conveying water (W) out of the water tank (2) into the functional component (4a),
- having a heating facility (6) arranged in the water pipe (3) between the conveying facility (5) and the functional component (4a) for heating the water (W) flowing through the water pipe (3),
- having a bypass valve (7), by way of which water can be guided past the conveying facility (5) when the bypass valve (7) is in an open position,
- having a stop valve (8) arranged in the water pipe (3) between the heating facility (6) and the functional component (4a), said stop valve closing off the water pipe (3) in a closed position, so that no water (W) can flow from the heating facility (6) into the functional component (4a),
- wherein the coffee machine (1) has a container (10) for a care fluid, which opens into the water pipe (3) between the water tank (2) and the heating facility (6), in particular in the region of the bypass valve (7),
- wherein the coffee machine (1) comprises a control/regulation facilty (9), by means of which the bypass valve (7) can be moved between the open position and a closed position, in which no water (W) can be guided past the conveying facility (5), and by means of which the stop valve (8) can be moved between the closed position and an open position, in which water (W) can flow from the heating facility (6) into the functional component (4a),
- wherein the coffee machine (1) can be moved into a first operating state and into a second operating state by means of the control/regulation facility (9),
- wherein in the first operating state, the control/regulation facility (9) is used to move the bypass valve (7) into the closed position and the stop valve (8) into the open position,
- wherein in the second operating state, the control/regulation facility (9) is used to move the bypass valve (7) into the open position and the stop valve (8) into the closed position.

2. Coffee machine according to claim 1,
**characterised in that**
- the conveying facility (5) can be moved by means of the control/regulation facility (9) between an active state, in which it conveys water (W) from the water tank to the functional component (4a), and an inactive state, in which the conveying facility (5) does not convey water,
- wherein in the first operating state of the coffee machine (1) the control/regulation facility (9) is used to move the conveying facility (5) into the active state and in the second operating state into the inactive state.

3. Coffee machine according to claim 1 or 2,
**characterised in that**
- the heating facility (6) can be moved by means of the control/regulation facility (9) between an active state, in which the water (W) guided through the heating facility (6) is heated hereby, and an inactive state, in which the water (W) guided through the heating facility (6) is not heated hereby,
- wherein in the second operating state of the coffee machine (1) the heating facility (6) is moved into the active state.

4. Coffee machine according to claim 3,
**characterised in that**
the heating facility (6) is also moved into the active state in the first operating state of the coffee machine (1).

5. Coffee machine according to one of the preceding claims,
**characterised in that**
the conveying facility (5) comprises a reciprocating plunger type pump (5a), which is embodied such that water (W) available in the water pipe (3) can be conveyed thereby in the direction of the functional component (4a), but not in the direction of the water tank (2).

6. Coffee machine according to one of the preceding claims,
**characterised in that**
the functional component (4a) is a brewing chamber or a drainage facility or a coffee outlet (4, 11).

7. Method for operating a coffee machine (1) according to one of the preceding claims, according to which:
- in the first operating state of the coffee machine (1) water (W) or a care fluid is conveyed by means of the conveying facility (5) through the water pipe (3) via the heating facility (6) to the functional component (4a),
- in the second operating state of the coffee machine (1), when the conveying facility (5) is inactive, water (W) or care fluid located in the water pipe (3) is heated by the active heating facility (6) and thus transported out of the water pipe (3) to the water tank (2) or evaporated.

8. Method according to claim 7,
**characterised in that**
the coffee machine (1) is firstly operated in the first operating state, at least until the water (W) or the care fluid has reached the heating facility (6), and is then switched over into the second operating state.

9. Method according to claim 7 or 8,
**characterised in that**
the second operating state is retained until water (W) is no longer available in the water pipe (3), in particular in the entire area between the stop valve (8) and the water tank (2).

## Revendications

1. Machine à café (1),
- avec un réservoir à eau (2) qui communique fluidiquement avec un composant fonctionnel (4) au moyen d'une conduite d'eau (3), de sorte que l'eau (W) présente dans le réservoir à eau (2) puisse être introduite dans le composant fonctionnel (4a) au moyen de la conduite d'eau (3),
- avec un dispositif de circulation (5) disposé dans la conduite d'eau (3) pour faire circuler l'eau (W) du réservoir à eau (2) dans le composant fonctionnel (4a),
- avec un dispositif de chauffe (6) disposé entre le dispositif de circulation (5) et le composant fonctionnel (4a) dans la conduite d'eau (3), pour chauffer l'eau (W) s'écoulant à travers la conduite d'eau (3),
- avec une soupape de dérivation (7), via laquelle dans une position ouverte de la soupape de dérivation (7), de l'eau peut contourner le dispositif de circulation (5),
- avec une soupape d'arrêt (8) disposée dans la conduite d'eau (3) entre le dispositif de chauffe (6) et le composant fonctionnel (4a), laquelle soupape d'arrêt obture dans une position fermée la conduite d'eau (3) de sorte à empêcher tout écoulement d'eau (W) du dispositif de chauffe (6) dans le composant fonctionnel (4a),
- dans laquelle la machine à café (1) présente un récipient (10) d'un fluide d'entretien, lequel débouche entre le réservoir à eau (2) et le dispositif de chauffe (6), en particulier dans la région de la soupape de dérivation (7), dans la conduite d'eau (3),
- dans laquelle la machine à café (1) comprend un dispositif de commande/régulation (9), au moyen duquel la soupape de dérivation (7) est déplaçable entre la position ouverte et une position fermée, dans laquelle aucune quantité d'eau (W) ne peut contourner le dispositif de circulation (5), et au moyen duquel la soupape d'arrêt (8) est déplaçable entre la position fermée et une position ouverte, dans laquelle de l'eau (W) peut s'écouler du dispositif de chauffe (6) dans le composant fonctionnel (4a),
- dans laquelle la machine à café (1) est déplaçable au moyen du dispositif de commande/régulation (9) dans un premier état de fonctionnement et dans un deuxième état de fonctionnement,
- dans laquelle dans le premier état de fonctionnement, le dispositif de commande/régulation (9) déplace la soupape de dérivation (7) dans la position fermée et la soupape d'arrêt (8) dans la position ouverte,
- dans laquelle dans le deuxième état de fonctionnement, le dispositif de commande/régulation (9) déplace la soupape de dérivation (7) dans la position ouverte et la soupape d'arrêt (8) dans la position fermée.

2. Machine à café selon la revendication 1, **caractérisée en ce que**
- le dispositif de circulation (5) est déplaçable au moyen du dispositif de commande/régulation (9) entre un état actif, dans lequel il fait circuler de l'eau (W) du réservoir à eau vers le composant fonctionnel (4a), et un état inactif, dans lequel le dispositif de circulation (5) ne fait pas circuler d'eau,
- dans laquelle le dispositif de commande/régulation (9) déplace le dispositif de circulation (5) dans l'état actif dans le premier état de fonctionnement de la machine à café (1) et dans l'état inactif dans le deuxième état de fonctionnement.

3. Machine à café selon la revendication 1 ou 2, **caractérisée en ce que**
- le dispositif de chauffe (6) est déplaçable au moyen du dispositif de commande/régulation (9) entre un état actif, dans lequel le dispositif de chauffe (6) chauffe l'eau (W) qui le traverse, et un état inactif, dans lequel le dispositif de chauffe (6) ne chauffe pas l'eau (W) qui le traverse,
- dans lequel le dispositif de chauffe (6) est déplacé dans l'état actif dans le deuxième état de fonctionnement de la machine à café (1).

4. Machine à café selon la revendication 3, **caractérisée en ce que** le dispositif de chauffe (6) est également déplacée dans l'état actif dans le premier état de fonctionnement de la machine à café (1).

5. Machine à café selon l'une des revendications précédentes, **caractérisée en ce que** le dispositif de circulation (5) comprend une pompe à piston oscillant (5a), formé de telle sorte qu'elle est capable de faire circuler l'eau (W) présente dans la conduite d'eau (3) en direction du composant fonctionnel (4a) mais pas en direction du réservoir à eau (2).

6. Machine à café selon l'une des revendications précédentes, **caractérisée en ce que** le composant fonctionnel (4a) est une chambre d'échaudage ou un dispositif de drainage ou une sortie de café (4, 11).

7. Procédé d'exploitation d'une machine à café (1) selon l'une des revendications précédentes, conformément auquel :
- dans le premier état de fonctionnement de la machine à café (1) de l'eau (W) ou un fluide d'entretien est mis en circulation au moyen du dispositif de circulation (5) à travers la conduite d'eau (3) via le dispositif de chauffe (6) vers le composant fonctionnel (4a),
- dans le deuxième état de fonctionnement de la machine à café (1), en présence d'un dispositif de circulation (5) inactif, l'eau (W) ou le fluide d'entretien se trouvant dans la conduite d'eau (3) est chauffé par le dispositif de chauffe (6) actif et ce faisant transportée ou évaporée en dehors de la conduite d'eau (3) vers le réservoir à eau (2).

8. Procédé selon la revendication 7, **caractérisé en ce que** la machine à café (1) est d'abord exploitée dans le premier état de fonctionnement, au moins jusqu'à ce que l'eau (W) resp. le fluide d'entretien ait atteint le dispositif de chauffe (6) et passe ensuite au deuxième état de fonctionnement.

9. Procédé selon la revendication 7 ou 8, **caractérisé en ce que** le deuxième état de fonctionnement est maintenu aussi longtemps que la conduite d'eau (3), en particulier l'ensemble de la région entre la soupape d'arrêt (8) et le réservoir à eau (2), soit exempt(e) d'eau (W).
